Europäisches Patentamt

European Patent Office

Office européen des brevets

(11) Veröffentlichungsnummer: **0 299 171 B1**

(19)

# (12) EUROPÄISCHE PATENTSCHRIFT

(45) Veröffentlichungstag der Patentschrift: **04.05.94**

(21) Anmeldenummer: **88108189.7**

(22) Anmeldetag: **21.05.88**

(51) Int. Cl.5: **C07F 7/00**

Die Akte enthält technische Angaben, die nach
dem Eingang der Anmeldung eingereicht wurden
und die nicht in dieser Patentschrift enthalten sind.

(54) **Alkoholfreie Orthoester des Zirkoniums und Hafniums und Verfahren zu deren Herstellung.**

(30) Priorität: **17.07.87 DE 3723713**

(43) Veröffentlichungstag der Anmeldung:
**18.01.89 Patentblatt 89/03**

(45) Bekanntmachung des Hinweises auf die
Patenterteilung:
**04.05.94 Patentblatt 94/18**

(84) Benannte Vertragsstaaten:
**DE FR GB IT**

(56) Entgegenhaltungen:
**DE-A- 2 220 101**
**GB-A- 2 177 397**

**D.C. Bradley, R.C. Mehrotra, D.P. Gaur: "Metal
Alkoxides" (1978) Academic Press; Seiten
47, 66-69, 130, 131, 262-264**

**H.-O. Kalinowski, S. Berger, S. Braun: "Car-
bon-13 NMR-Spectroscopy" (John Wiley),
Seite 176**

(73) Patentinhaber: **HÜLS AKTIENGESELLSCHAFT**

**D-45764 Marl(DE)**

(72) Erfinder: **Horns, Udo, Dr. Dipl.-Chem.**
**Schillerstrasse 6**
**D-7888 Rheinfelden(DE)**
Erfinder: **Srebny, Hans-Günther, Dr.**
**Dipl.-Chem.**
**Anemolter Nr. 3**
**D-3078 Stolzenau(DE)**
Erfinder: **Vahlensieck, Hans-Joachim, Dr.**
**Dipl.-Chem.**
**Im habiken 2**
**D-7867 Wehr(DE)**

**Beschreibung**

Gegenstand der vorliegenden Erfindung ist ein Verfahren zur Herstellung von alkoholfreien Orthoestern des Zirkoniums und Hafniums sowie alkoholfreie Orthoester dieser Metalle.

Die Herstellung von Zirkonium- und Hafniumalkoxyden, die auch als Zirkonium- oder Hafniumsäureester bezeichnet werden, erfolgt im allgemeinen analog der Herstellung von Titansäureestern durch Umsetzung von den entsprechenden Metallhalogeniden mit Alkoholen. Dabei dient der eingesetzte Alkohol gleichzeitig als Lösungsmittel für die Umsetzung und für den entstehenden Ester, der in dieser Lösung im allgemeinen eingesetzt wird. Der bei dieser Umsetzung freiwerdende Halogenwasserstoff wird durch Zusatz von Aminen neutralisiert.

Bei dieser genannten Arbeitsweise erhält man Produkte, die einen beachtlichen Polymeranteil in Form von Metalloxan-Verbindungen enthalten, die im wesentlichen aufgrund folgender Nebenreaktionen anfallen:

Der eingesetzte Alkohol reagiert mit dem freiwerdenden Halogenwasserstoff unter Bildung von Alkylhalogenid und/oder Alkenen und/oder Ethern; hierbei wird Wasser frei. das wiederum auf den Metallester hydrolysierend unter Metalloxan-Bildung wirkt.

Es hat sich weiterhin herausgestellt, daß bei der Umsetzung von Zirkonium- oder Hafniumtetrahalogenid mit überschüssigem Alkohol - und auch bei der Umesterung von niederen Zirkonium- oder Hafniumestern mit höheren Alkoholen - ein Produkt entsteht, das ein höheres Molekulargewicht besitzt als der Formel $M(OR)_4$ (M = Zr, Hf) entspricht. Untersuchungen haben ergeben, daß dieses Produkt ein Molekül des Alkohols mehr aufweist als der Formel $M(OR)_4$ (R = Alkoholrest) entspricht, obwohl dieses Produkt auch als Zirkonium- oder Hafniumsäureester der Formel $M(OR)_4$ bezeichnet wurde. Dieses bekannte, überschüssigen Alkohol enthaltene Produkt liegt in dimerer oder oligomerer Form vor; es ist eine Flüssigkeit und ließ sich bisher in allen Anwendungsgebieten für Zirkonium- und Hafniumsäureester einsetzen. In speziellen Anwendungsgebieten, wie z. B. beim Einsatz als Katalysator bei Polymerisationsreaktionen gemäß Ziegler/Natta oder Umesterungsreaktionen stört jedoch dieser gebundene Alkohol.

Die Dokumente D.C. Bradley et al 'Metal Alkoxides' (1978) Aademic Press S. 47, 66-69, 130, 131,262-264 sowie GB-A-2 177-397 betreffen Kondensationsprodukte mit mehr als einem Metallatom im Molekül und geben daher keinen Hinweis, daß dort Stoffe und Verbindungen erhalten werden, denen die Formel der monomeren Orthoester M $(OR)_4$ tatsächlich zukommt.

Es bestand deshalb die Aufgabe, alkoholfreie Ester der Zirkonium- und Hafniumsäure herzustellen und ein Verfahren zur Herstellung dieser Ester aufzufinden, bei dem die alkoholhaltigen Ester nicht entstehen und die Bildung von Polymeren gegenüber den bekannten Verfahren herabgesetzt wird.

In Erfüllung dieser Aufgabe wurde nun ein Verfahren zur Herstellung von Zirkonium- und Hafniumorthoestern der Formel I $M(OR)_4$ (I), in der M für Zirkonium oder Hafnium und R für einen Alkyl- oder Cycloalkylrest mit 1 bis 20 C-Atomen steht, gefunden, bei dem Metallhalogenide mit Alkoholen umgesetzt werden und die Neutralisation mit Hilfe von Aminen durchgeführt wird, das dadurch gekennzeichnet ist, daß die Umsetzung in einem Kohlenwasserstoff oder Chlorkohlenwasserstoff durchgeführt wird und die eingesetzte Alkoholmenge derjenigen entspricht, die stöchiometrisch zur Bildung des Orthoesters notwendig ist.

Als Kohlenwasserstoffe und Chlorkohlenwasserstoffe können praktisch alle Verbindungen dieser Gruppe eingesetzt werden, die im Bereich der Reaktionstemperatur flüssig sind. Darunter fallen beispielsweise die Pentane, Hexane, Heptane, das Isooktan, Cyclohexan, Methylcyclohexan; Benzinfraktionen wie Petrolether oder Ligroin, Benzol, Toluol, die Xylole, Methylenchlorid, Chloroform, Tetrachlorkohlenstoff, trans-Dichlorethylen, Trichlorethylen, Perchlorethylen, Chlorbenzol, die Dichlorbenzole, Trichlortrifluorethylen, 1,1,1,3-Tetrachlorpropan.

Aus dieser Zusammenstellung geht hervor, daß sich sowohl aliphatische als auch aromatische oder cycloaliphatische, ggf. chlorierte Kohlenwasserstoffe eignen, die auch verzweigt sein können und auch inerte Substituenten aufweisen können.

Die als Ausgangsprodukte für das erfindungsgemäße Verfahren einsetzbaren Metallhalogenide wie Zr $Cl_4$, Zr $Br_4$ oder Hf $Cl_4$ brauchen in den einsetzbaren Lösungsmitteln nicht löslich zu sein. Für die erfindungsgemäße Umsetzung genügt es, daß die Metallhalogenide als Suspension in diesen Lösungsmitteln vorliegen und während ihrer Reaktion mit den Alkoholen durch Umrühren oder andere geeignete Maßnahmen in den Lösungsmitteln verteilt gehalten werden.

Die zur Umsetzung geeigneten Alkohole umfassen sowohl aliphatische als auch cycloaliphatische, gradkettige oder verzweigte Alkohole mit 1 bis 20 C-Atomen. Auch Etheralkohole, die bis zu 10 Etherbrücken enthalten können, lassen sich erfindungsgemäß umsetzen.

Die einzusetzende Alkoholmenge muß so gewählt werden, daß das gewünschte Metalltetraalkoxyd entsteht. Das Molverhältnis Alkohol : Metallhalogenid liegt also bei 4 : 1; ein geringer Überschuß an Alkohol, der bis zu 10 % betragen kann, stört den erfindungsgemäßen Reaktionsablauf nicht wesentlich. Ein

EP 0 299 171 B1

stöchiometrischer Unterschuß an Alkohol gegenüber dem Metallhalogenid entsprechend dem obengenannten Molverhältnis von 4 : 1 ist erfindungsgemäß möglich, vermindert jedoch die Ausbeute an Orthoestern in bezug auf eingesetztes Metallhalogenid.

Die Dosierung von Metallhalogenid und Alkohol kann auf beliebige Weise erfolgen unter der Voraussetzung, daß das angegebene Molverhältnis der Reaktionspartner gewahrt wird. Vorzugsweise wird deshalb der Alkohol in eine vorgelegte Suspension des Metallhalogenids in dem erfindungsgemäßen Lösungsmittel eingeführt. Man kann jedoch auch beide Komponenten gleichzeitig in ein Reaktionsgefäß einführen. Es ist von Vorteil, den Alkohol in der Weise zu dosieren, daß er praktisch nicht in Kontakt mit der Gasphase kommt und unter die Oberfläche des Reaktionsmediums eingeführt wird. Dies läßt sich beispielsweise so durchführen, daß er über ein Tauchrohr, das in das Lösungsmittel eintaucht, in das Reaktionsmedium eingeleitet wird.

Die bei der Reaktion zwischen Metallhalogenid und Alkohol entstehenden Reaktionsprodukte sind in dem Lösungsmittel nur zum Teil löslich. Die Reaktionsprodukte zersetzen sich jedoch bei der Neutralisation mit den Aminen unter Bildung des erfindungsgemäßen Orthoesters und von Alkohol, der mit noch nicht umgesetztem Metallhalogenid unter Bildung des gewünschten Esters reagiert.

Der Zusatz des Amins kann deshalb zu einem beliebigen Zeitpunkt während der Gesamtreaktion erfolgen. Zweckmäßigerweise erfolgt er erst nach Beendigung der Dosierung des Alkohols. Dabei ist es dann von Vorteil, das Reaktionsgefäß zu evakuieren und das Amin in das unter Unterdruck stehende Reaktionsgefäß einzuführen.

Die Menge des einzusetzenden Amins hängt von der Menge des zu neutralisierenden Halogenwasserstoffs ab. Das dabei sich bildende Aminhalogenid ist in dem Lösungsmittel unlöslich und wird auf an sich bekannte Weise von dem Orthoester abgetrennt.

Als Amin wird erfindungsgemäß vorzugsweise Ammoniak eingesetzt. Es eignen sich jedoch auch andere Amine, die zum Abbinden und Neutralisieren von Halogenwasserstoff bekannt sind, wie z. B. Methylamin, Ethylendiamin oder Pyridin.

Die Isolierung des Orthoesters aus der Lösung in dem erfindungsgemäßen Lösungsmittel erfolgt auf an sich bekannte Weise, vorzugsweise durch Abdestillieren des Lösungsmittels. Der dann erhaltene Orthoester enthält keinen über das Molverhältnis 1 : 4 von Metall : Alkohol hinausgehenden gebundenen Alkohol, wie durch $^1$H-NMR- und $^{13}$C-NMR-Messungen nachgewiesen wurde. Diese Messungen belegen auch die Struktur der erfindungsgemäßen neuen Zirkonium- und Hafniumester. Im Gegensatz zu den bekannten Produkten liegen diese Ester nicht in assoziierter Form vor, sondern entsprechen der Formal $M(OR)_4$.

Diese neuen Ester sind oberhalb - 33 °C Feststoffe. Sie sind im Gegensatz zu den bisher bekannten gelben bis braunen Ester-Addukten farblos oder nur schwach gefärbt. Sie fallen bei der oben geschilderten Herstellungsweise bereits in einer solchen Reinheit an, die für die meisten Anwendungszwecke ausreichend ist. Eine weitere Reinigung nach an sich bekannten Methoden ist möglich.

Für Produkte mit bei Normalbedingungen festem Aggregatzustand können dabei die gängigen Methoden der Feststoff-Verarbeitung durch Kristallisation, beispielsweise in einem Kristallisator, oder der Phasentrennung, beispielsweise durch Sedimentation oder Filtration, und der Trocknung angewandt werden. Einige der erfindungsgemäßen Produkte fallen erst nach einer solchen zusätzlichen Behandlung als Feststoffe an.

Die Reaktion zwischen Metallhalogenid und Alkohol wird im allgemeinen bei Normaldruck durchgeführt. Die Anwendung von Unterdruck ist ebenfalls möglich, besonders dann, wenn man während der Zudosierung des Alkohols die Entfernung des dabei entstehenden Halogenwasserstoffs beschleunigen will. Auch die Anwendung von Überdruck ist möglich, insbesondere nach Zudosierung des Amins.

Das erfindungsgemäße Verfahren wird in der Praxis zweckmäßigerweise in einem normalen Rührreaktor mit Rückflußkühler durchgeführt, selbstverständlich unter wasserfreien Bedingungen, indem man das Zirkonium-oder Hafniumhalogenid zusammen mit einem geeigneten Suspensionsmedium vorlegt und den Alkohol über ein Tauchrohr unter die Oberfläche der gerührten Suspension dosiert.

Dieser erste Reaktionsabschnitt ist exotherm, die Temperatur im Reaktor steigt auf 40 bis 60 °C an.

Nach dem Einleiten des Alkohols in die Metallhalogenid-Lösungsmittelsuspension wird der Gasraum über dem Reaktionsmedium evakuiert, vorzugsweise bis auf einen Druck von 150 mbar; die Temperatur im Rührreaktor sinkt dabei auf 20 bis 30 °C. Daraufhin wird mit Ammoniak bis zu einem Druck von etwa 1 200 mbar aufgefüllt. Während der sich dann abspielenden Neutralisation wird das Reaktionsgefäß vorteilhaft mit Wasser bzw. Eiswasser gekühlt. Die Temperaturen im Reaktionsmedium liegen zwischen 3 und 60 °C.

Nach beendeter Neutralisation wird das ausgefallene Ammoniumhalogenid abfiltriert und aus dem Filtrat das Lösungsmittel abdestilliert.

Bei dieser Verfahrensweise werden Nebenreaktionen weitestgehend unterdrückt, so daß die Ausbeuten an reinem Produkt der allgemeinen Formel I nahezu 100 % betragen.

Die nachfolgenden Beispiele erläutern die Erfindung, ohne jedoch ihren Umfang zu begrenzen:

Beispiel 1

Die Reaktionsapparatur besteht aus einem 2 000-ml-Mehrhalskolben mit Innenthermometer, Rührer, Tropftrichter mit Tauchrohr und Rückflußkühler.

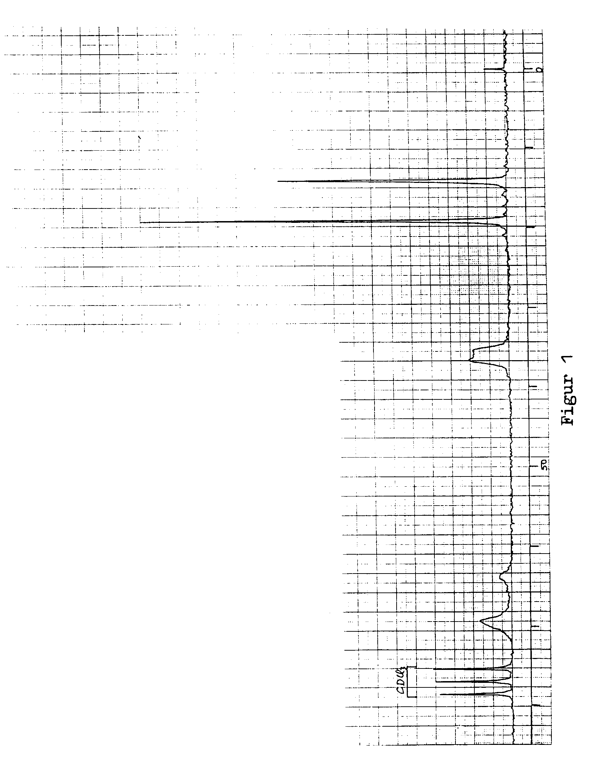

Es wurden 204 g $ZrCl_4$ in 750 g Heptan suspendiert. Hierzu wurden unter Rühren während 15 Minuten über ein Tauchrohr 265 g n-Butanol unter die Oberfläche des Reaktionszusatzes gegeben; die Innentemperatur stieg auf 50 °C. Es entstehen zwei Phasen, beide farblos und trüb. Anschließend wurde die Apparatur bis auf 100 mbar absolut evakuiert und während 30 Minuten 64 g $NH_3$ gasförmig bis zum Anstieg des Druckes auf Umgebungsdruck eingeleitet. Während der Neutralisation wurde das Reaktionsgefäß mit Eiswasser gekühlt. Abfiltrieren des $NH_4Cl$ ergab 1 055 g klares Filtrat. Hieraus erhielt man nach Abdestillieren des Heptans am Rotationsverdampfer 330 g 98 % farbloses, hochviskoses $Zr(O-n-C_4H_9)_4$. Fp = 134 °C. Das $^{13}$C-NMR-Spektrum geht aus Figur 1 hervor.

Beispiel 2

In einer wie im Beispiel 1 beschriebenen Reaktionsapparatur wurden 136 g $ZrCl_4$ in 600 g Heptan suspendiert. Hierzu wurden unter Rühren während 15 Minuten über das Tauchrohr 142 g i-Propanol unter die Oberfläche des Reaktoransatzes gegeben; die Innentemperatur stieg auf 52 °C. Es entstanden zwei Phasen, die untere gelb, trüb; die obere fast farblos, trüb. Anschließend wurde die Apparatur auf 200 mbar absolut evakuiert und während 26 Minuten 41 g $NH_3$ gasförmig bis zum Anstieg des Druckes auf Umgebungsdruck eingeleitet. Während der Neutralisation wurde das Reaktionsgefäß mit Eiswasser gekühlt. Abtrennen des $NH_4Cl$ auf bekanntem Wege ergab 770 g klares Filtrat. Hieraus erhielt man nach Abdestillieren des Heptans am Rotationsverdampfer 187,4 g 98 % $Zr(o-i-C_3H_7)_4$ als farblosen kristallinen Feststoff. Fp = 208 °C.

Beispiel 3

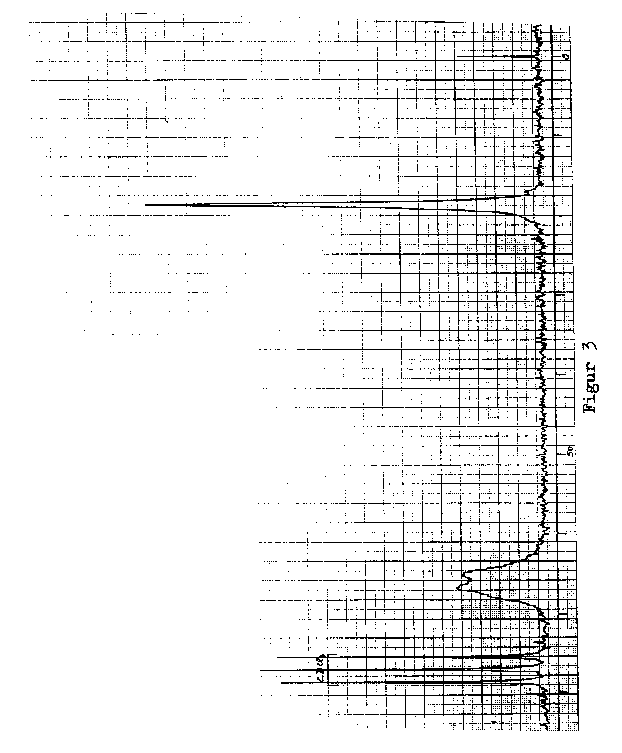

In einer wie im Beispiel 1 beschriebenen Reaktionsapparatur wurden 204 g $ZrCl_4$ in 750 g Hexan suspendiert. Hierzu wurden unter Rühren während 15 Minuten über das Tauchrohr 169 g EtOH unter die Oberfläche des Reaktionsansatzes gegeben; die Innentemperatur stieg auf 51 °C. Es entstanden zwei Phasen, die untere gelblich, trüb; die obere farblos, trüb. Anschließend wurde die Apparatur auf 150 mbar absolut evakuiert und während 15 Minuten 62 g $NH_3$ gasförmig bis zum Anstieg des Druckes auf Umgebungsdruck eingeleitet. Während der Neutralisation wurde das Reaktionsgefäß mit Eiswasser gekühlt. Abtrennen des $NH_4Cl$ auf bekanntem Wege ergab 971,3 g klares Filtrat. Hieraus erhielt man nach Abdestillieren am Rotationsverdampfer 232,7 g 98 % $Zr(O-C_2H_5)_4$ als farblosen kristallinen Feststoff. Fp = 180 °C. Das $^{13}$C-NMR-Spektrum geht aus Figur 3 hervor.

Beispiel 4

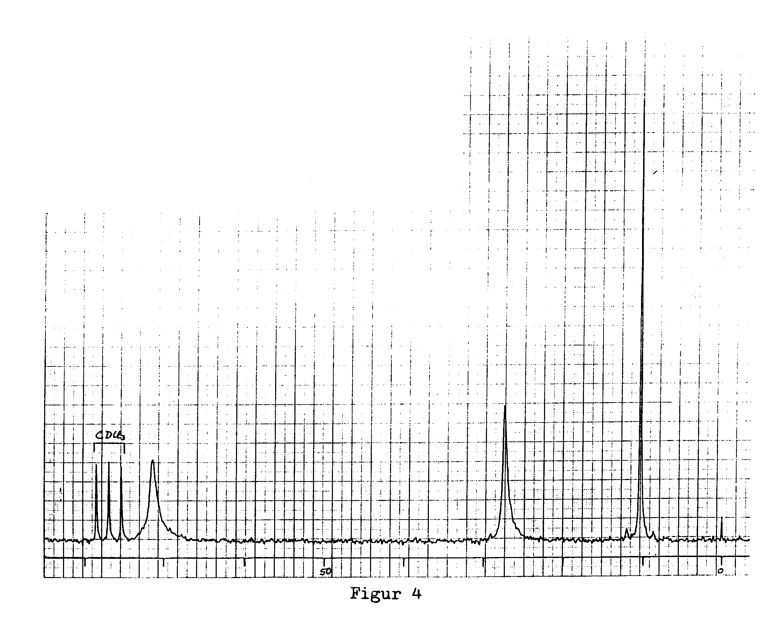

In einer wie im Beispiel 1 beschriebenen Reaktionsapparatur wurden 204 g $ZrCl_4$ in 750 g Hexan suspendiert. Hierzu wurden unter Rühren während 1 Minute über das Tauchrohr 220 g n-Propanol unter die Oberfläche des Reaktionsansatzes gegeben; die Innentemperatur stieg auf 51 °C. Es entstanden zwei Phasen, die untere gelblich, trüb; die obere farblos, trüb. Anschließend wurde die Apparatur auf 150 mbar absolut evakuiert und während 32 Minuten 61 g $NH_3$ gasförmig eingeleitet. Während der Neutralisation wurde das Reaktionsgefäß mit Eiswasser gekühlt. Abtrennen des $NH_4Cl$ auf bekanntem Wege ergab 1 020,3 g klares Filtrat. Hieraus erhielt man nach Abdestillieren am Rotationsverdampfer 280,7 g 98% $Zr(O-n-C_3H_7)_4$ als farblosen kristallinen Feststoff. Fp = 214 °C. Das $^{13}$C-NMR-Spektrum geht aus Figur 4 hervor.

Beispiel 5

In einer wie im Beispiel 1 beschriebenen Reaktionsapparatur wurden 160 g $HfCl_4$ in 600 g Heptan suspendiert. Hierzu wurden unter Rühren während 15 Minuten über das Tauchrohr 155 g n-Butanol unter die Oberfläche des Reaktionsansatzes gegeben; die Innentemperatur stieg auf 48 °C. Es entstanden zwei Phasen, beide farblos und trüb. Anschließend wurde die Apparatur bis auf 100 mbar absolut evakuiert und während 30 Minuten 37 g $NH_3$ gasförmig eingeleitet. Während der Neutralisation wurde das Reaktionsgefäß mit Eiswasser gekühlt. Abfiltrieren des $NH_4Cl$ ergab 821,7 g klares Filtrat. Hieraus erhielt man nach Abdestillieren des Heptans am Rotationsverdampfer 228,2 g 97 % farbloses, hochviskoses $Hf(O-n-C_4H_9)_4$. Fp = 106 °C.

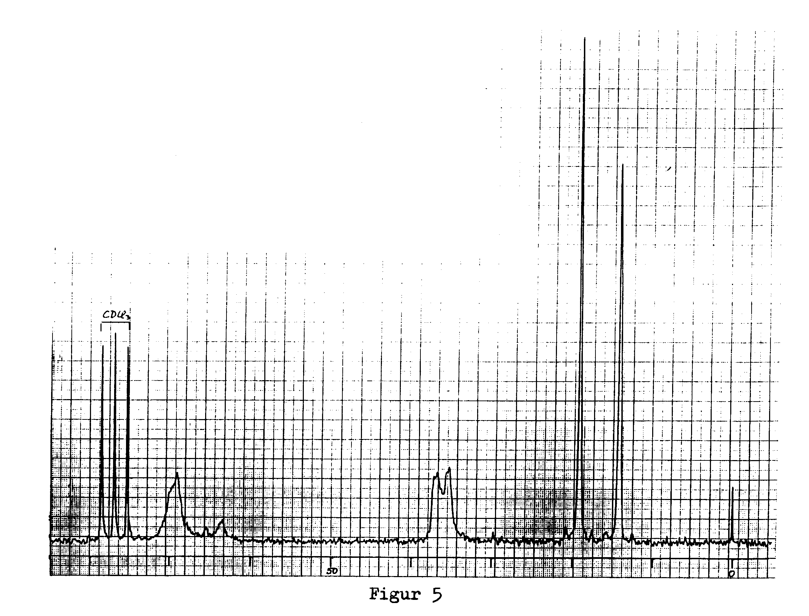

Das $^{13}$C-NMR-Spektrum geht aus Figur 5 hervor.

Beispiel 6

Analog dem Beispiel 5 wurden die in der Tabelle 1 genannten Alkohole mit HfCl$_4$ umgesetzt und die in der Tabelle genannten Orthoester mit den angegebenen Schmelzpunkten erhalten.

Tabelle 1

| eingesetzter Alkohol | Lösungsmittel | erhaltener Orthoester | Schmelzpunkt |
|---|---|---|---|
| Ethanol | Heptan | $Hf(OC_2H_5)_4$ | 198 °C |
| n-Butanol | Heptan | $Hf[O(CH_2)_3CH_3]_4$ | 106 °C |
| i-Butanol | Heptan | $Hf[O-CH(CH_3)-C_2H_5]_4$ | 142 °C |
| Octanol | Heptan | $Hf(O-C_8H_{17})_4$ | -13 °C |

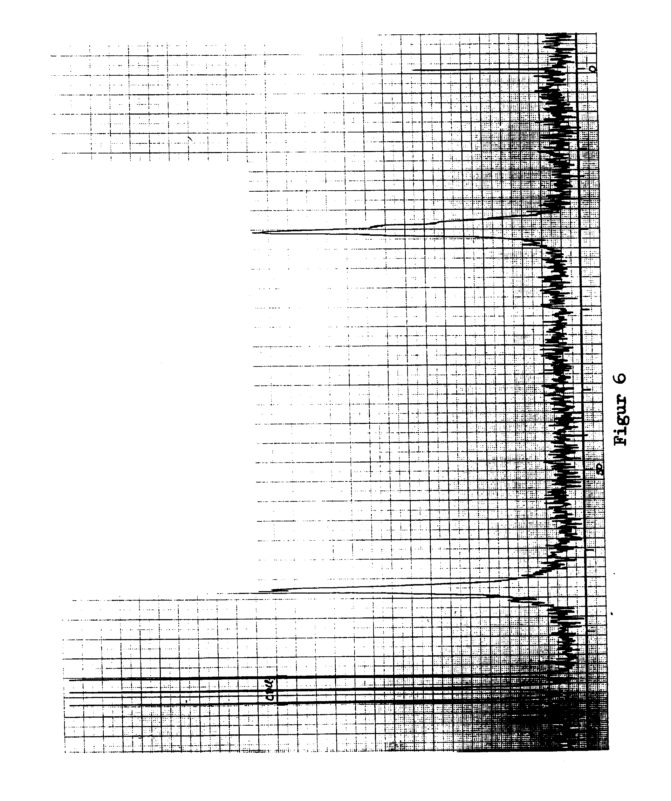

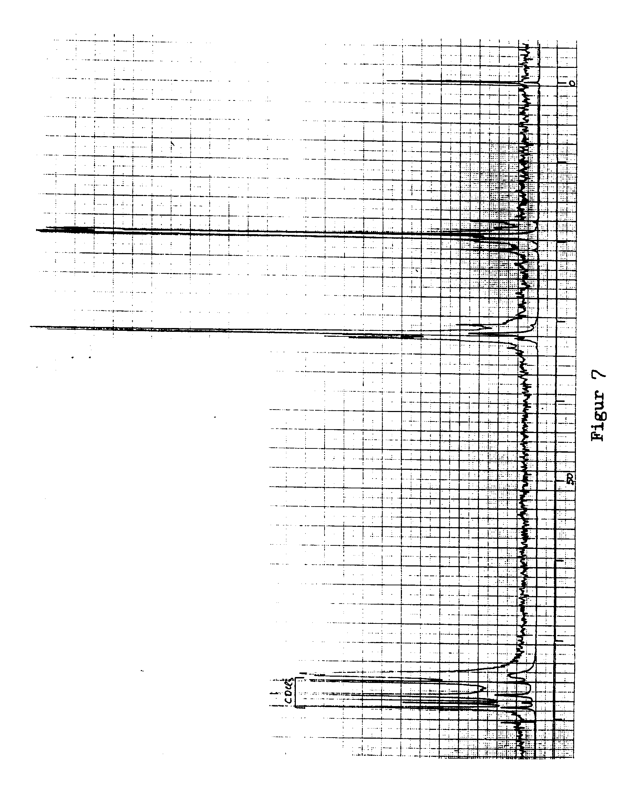

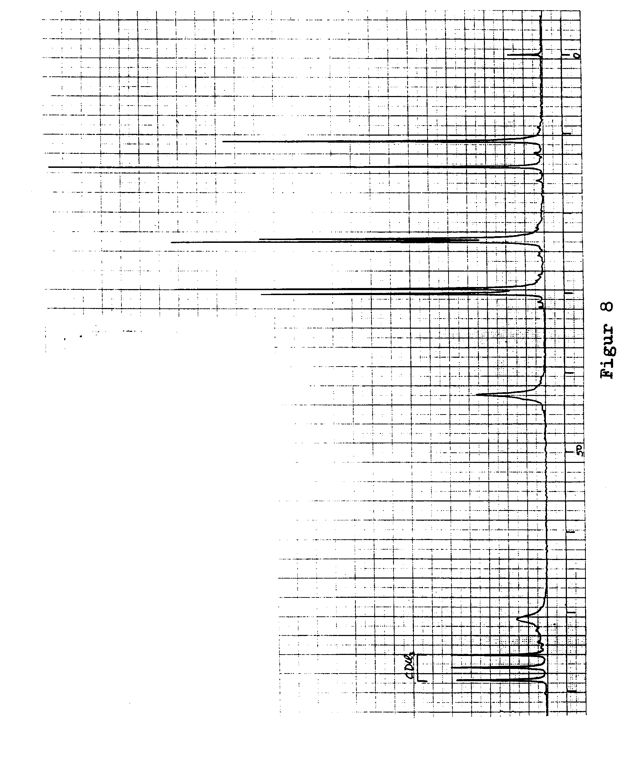

Das $^{13}$C-NMR-Spektrum von Tetra-ethylhafnat geht aus Figur 6, dasjenige von Tetra-iso-butylhafnat aus Figur 7 und dasjenige von Tetra-octylhafnat aus Figur 8 hervor.

## Patentansprüche

1. Kristalline, alkoholfreie Zirkoniumorthoester der allgemeinen Formel $Zr(OR)_4$, in der R für Alkylreste mit 2 bis 9 C-Atomen steht.

6

**2.** Kristallines, alkoholfreies Tetraethylzirkonat der Formel $Zr(OC_2H_5)_4$ gemäß Anspruch 1 mit einem Schmelzpunkt von 180°C.

**3.** Kristallines, alkoholfreies Tetra(n-propylzirkonat) der Formel $Zr(O\text{-}CH_2\text{-}CH_2\text{-}CH_3)_4$ gemäß Anspruch 1 mit einem Schmelzpunkt von 214°C.

**4.** Kristallines, alkoholfreies Tetra(iso-propylzirkonat) der Formel $Zr[O\text{-}CH(CH_3)_2]_4$ gemäß Anspruch 1 mit einem Schmelzpunkt von 208°C.

**5.** Kristallines, alkoholfreies Tetra(n-butylzirkonat) der Formel $Zr(O\text{-}CH_2\text{-}CH_2\text{-}CH_2\text{-}CH_3)_4$ gemäß Anspruch 1 mit einem Schmelzpunkt von 134°C.

**6.** Kristallines, alkoholfreies Tetra(2-ethyl-hexylzirkonat) gemäß Anspruch 1 der Formel $Zr\ [O\text{-}CH_2\text{-}CH(C_2H_5)\ C_4H_9]_4$ mit einem Schmelzpunkt von -33°C.

**7.** Kristallines, alkoholfreies Tetra-nonylzirkonat der Formel $Zr(OC_9H_{19})_4$ gemäß Anspruch 1 mit einem Schmelzpunkt von -2°C.

**8.** Kristalline, alkoholfreie Hafniumorthoester der Formel $Hf(OR)_4$, in der R für Alkylreste mit 1 bis 4 C-Atomen steht.

**9.** Verfahren zur Herstellung von Zirkonium- und Hafniumorthoestern gemäß einem der Ansprüche 1 oder 8, bei dem Metallhalogenide mit Alkoholen umgesetzt werden und die Neutralisation mit Hilfe von Aminen durchgeführt wird, **dadurch gekennzeichnet**, daß die Umsetzung in einem Kohlenwasserstoff oder Chlorkohlenwasserstoff durchgeführt wird und die eingesetzte Alkoholmenge derjenigen entspricht, die stöchiometrisch zur Bildung des Orthoesters der Formel I notwendig ist.

**10.** Verfahren gemaß Anspruch 9, **dadurch gekennzeichnet**, daß man den Alkohol in eine vorgelegte Suspension des Metallhalogenids in dem Lösungsmittel ohne Berührung mit der Gasphase einleitet.

**11.** Verfahren gemaß Anspruch 9 oder 10, **dadurch gekennzeichnet**, daß man das Amin dem Reaktionsgemisch aus Metallhalogenid und Alkohol hinzufügt.

**12.** Verfahren gemäß Anspruch 11, **dadurch gekennzeichnet**, daß man den Zusatz des Amins unter Unterdruck durchführt.

**Claims**

**1.** Crystalline, alcohol-free zirconium orthoesters of the general formula $Zr(OR)_4$ in which R stands for alkyl residues with 2 to 9 C-atoms.

**2.** Crystalline, alcohol-free tetraethyl zirconate of the formula $Zr(OC_2H_5)_4$ according to claim 1, with a melting point of 180°C.

**3.** Crystalline, alcohol-free tetra(n-propylzirconate) of the formula $Zr(O\text{-}CH_2\text{-}CH_2\text{-}CH_3)_4$ according to claim 1, with a melting point of 214°C.

**4.** Crystalline, alcohol-free tetra(isopropylzirconate) of the formula $Zr[O\text{-}CH(CH_3)_2]_4$ according to claim 1 with a melting point of 208°C.

**5.** Crystalline, alcohol-free tetra(n-butylzirconate) of the formula $Zr(O\text{-}CH_2\text{-}CH_2\text{-}CH_2\text{-}CH_3)4$ according to claim 1, with a melting point of 134°C.

**6.** Crystalline, alcohol-free tetra(2-ethylhexylzirconate) according to claim 1 of the formula $Zr\ [O\text{-}CH_2\text{-}CH(C_2H_5)\ C_4H_9]_4$ with a melting point of -33°C.

**7.** Crystalline, alcohol-free tetranonylzirconate of the formula $Zr(OC_9H_{19})_4$ according to claim 1, with a melting point of -2°C.

7

8. Crystalline, alcohol-free hafnium orthoesters of the formula Hf(OR)$_4$, in which R stands for alkyl residues with 1 to 4 C-atoms.

9. Process for the preparation of zirconium and hafniumorthoesters according to one of claims 1 to 8, in which metal halides are reacted with alcohols and neutralisation is carried out with the aid of amines, characterised in that the reaction is carried out in a hydrocarbon or chlorohydrocarbon and the amount of alcohol employed corresponds to that which is necessary stoichiometrically for formation of the orthoester of formula I.

10. Process according to claim 9, characterised in that the alcohol is introduced without contacting the gaseous phase into a provided suspension of the metal halide in the solvent.

11. Process according to claim 9 or 10, characterised in that the amine is supplied to the reaction mixture of metal halide and alcohol.

12. Process according to claim 11, characterised in that the addition of the amine is carried out under reduced pressure.

## Revendications

1. Ortho-esters de zirconium, cristallins et dépourvus d'alcool, de formule générale Zr(OR)$_4$, dans laquelle R représente des restes alkyles ayant 2 à 9 atomes de carbone.

2. Zirconate de tétraéthyle cristallin, sans alcool, de formule Zr (OC$_2$H$_5$)$_4$ selon la revendication 1, présentant un point de fusion de 180°C.

3. Zirconate de tétra(n-propyle) cristallin, sans alcool, de formule Rr(O-CH$_2$-CH$_2$-CH$_3$)$_4$, selon la revendication 1, ayant un point de fusion de 214°C.

4. Zirconate de tétra(isopropyle) cristallin, sans alcool, de formule Zr [(O-CH(CH$_3$)$_2$]$_4$, selon la revendication 1, ayant un point de fusion de 208°C.

5. Zirconate de tétra(n-butyle) cristallin, sans alcool, de formule Zr(O-CH$_2$-CH$_2$-CH$_2$-CH$_3$)$_4$, selon la revendication 1, ayant un point de fusion de 134°C.

6. Zirconate de tétra(2-éthyl-hexyle) cristallin, sans alcool, selon la revendication 1, de formule Zr [O-CH$_2$-CH (C$_2$H$_5$) C$_4$H$_9$]$_4$, ayant un point de fusion de -33°C.

7. Zirconate de tétranonyle, cristallin, sans alcool, de formule Zr(OC$_9$H$_{19}$)$_4$ selon la revendication 1, ayant un point de fusion de -2°C.

8. Ortho-esters d'hafnium cristallin, sans alcool, de formule Hf(OR)$_4$, dans laquelle R représente des restes alkyles ayant 1 à 4 atomes de carbone.

9. Procédé de préparation des ortho-esters de zirconium et de hafnium selon l'une des revendications 1 ou 8, selon lequel on fait réagir des halogénures de métaux avec des alcools et l'on effectue la neutralisation à l'aide d'amines, procédé caractérisé en ce qu'on effectue la réaction dans un hydrocarbure ou dans un hydrocarbure chloré et en ce que la quantité d'alcool que l'on utilise correspond à la quantité nécessaire stoéchiométriquement pour former l'ortho-ester de formule I.

10. Procédé selon la revendication 9, caractérisé en ce qu'on introduit l'alcool dans une suspension, préparée à l'avance, de l'halogénure de métal dans le solvant, sans contact avec la phase gazeuse.

11. Procédé selon la revendication 9 ou 10, caractérisé en ce qu'on introduit l'amine dans le mélange réactionnel formé par l'halogénure de métal et l'alcool.

12. Procédé selon la revendication 11, caractérisé en ce qu'on effectue l'addition de l'amine sous dépression.

Figur 1

Figur 3

Figur 4

Figur 5

Figur 6

EP 0 299 171 B1

Figur 7

14

Figur 8